# EUROPEAN PATENT APPLICATION

(11) **EP 2 683 007 A1**
(43) Date of publication of application: **08.01.2014**
(21) Application number: 12754792.5
(22) Date of filing: 01.03.2012
(51) Int. Cl.: H01M 4/58, C01B 25/45, H01M 4/36

(54) **ELECTRODE ACTIVE SUBSTANCE AND METHOD FOR PRODUCING SAME**

(30) Priority: 04.03.2011 JP 2011047608
(71) Applicant: Sumitomo Osaka Cement Co., Ltd., Tokyo 102-8465 (JP)
(72) Inventor: OONO Kouji, Tokyo 102-8465 (JP); OSHITARI Satoru, Tokyo 102-8465 (JP)
(74) Representative: Cabinet Laurent & Charras
(86) International application number: PCT/JP2012/055256
(87) International publication number: WO 2012/121110

(57) **Abstract**

Provided is an electrode active material that is obtained by coating a surface of each particle of Li_{w}AₓDO₄ (provided that, A represents at least one selected from the group consisting of Mn and Co, D represents one or more selected from the group consisting of P, Si, and S, 0 < w ≤ 4, and 0 < x ≤ 1.5) with a coating layer containing Li_{y}E_{z}PO₄ (provided that, E represents at least one selected from the group consisting of Fe and Ni, 0 < y ≤ 2, and 0 < z ≤ 1.5) and a carbonaceous electron conductive material. The electrode active material of the invention may be obtained by drying slurry obtained by suspending particles of Li_{w}AₓDO₄ in an aqueous solution containing a Li source, an E source, a PO₄ source, and a carbon source, and by subjecting the resultant dried product to a heat treatment under a non-oxidizing atmosphere.

## Description

### Technical Field

The present invention relates to an electrode active material and a method of producing the same, and more particularly, to an electrode active material, in which a phosphate-based active material that is suitably used as an electrode material of lithium ion batteries and that has an olivine structure, is used, and which is capable of realizing a lithium ion battery excellent in load characteristics, cycle characteristics, and an energy density, and a method of producing the same.

Priority is claimed on Japanese Patent Application No. 2011-047608, filed on March 4, 2011, the content of which is incorporated herein by reference.

### Background Art

Recently, as a battery that meets the expectations for miniaturization, lightness, and high capacity, a non-aqueous electrolytic solution-based secondary battery such as a lithium ion battery has been suggested and put into practical use.

The lithium ion battery is small in size, is light in weight, and has a high energy density compared to secondary batteries such as a lead battery, a nickel-cadmium battery, and a nickel-hydrogen battery in the related art, and thus the lithium ion battery has been used as a power supply of a portable electronic apparatus such as a cellular phone, and a note-book type personal computer. However, recently, an examination also has been made for a high-output power supply of an electric vehicle, a hybrid vehicle, and an electric tool. High-speed charge and discharge characteristics have been in demand for the electrode active material of the battery that is used as the high-output power supply. In addition, application of the lithium ion battery for smoothing of a power generation load, and a large-sized battery such as a stationary power supply and a backup power supply has also been examined, and long-term safety, reliability, resource abundance, and inexpensiveness (without problem in the amount of resources used) are regarded as important.

The lithium ion battery includes a positive electrode and a negative electrode which have properties capable of reversibly intercalating and deintercalating lithium ions, and a non-aqueous electrolyte.

The positive electrode is constituted by an electrode material that contains a lithium-containing metal oxide having properties capable of reversibly intercalating and deintercalating lithium ions called a positive electrode active material, a conductive auxiliary agent, and a binder. The electrode material is applied on a surface of metallic foil called a current collector, whereby a positive electrode is obtained.

As the positive electrode active material, commonly, lithium cobaltate (LiCoO₂) has been used. In addition to this, lithium (Li) compounds such as lithium nickelate (LiNiO₂), lithium manganate (LiMn₂O₄), and lithium iron phosphate (LiFePO₄) have been used.

However, among these lithium compounds, lithium cobaltate or lithium nickelate has various problems such as toxicity for the human body or the environment, resources, and an unstable charged state. In addition, the lithium manganate having a problem due to the lithium manganate dissolving in an electrolytic solution at a high temperature has been pointed out.

Therefore, recently, a phosphate-based electrode active material represented by lithium iron phosphate, which is excellent in long-term safety and reliability and has an olivine structure, has attracted attention.

The phosphate-based electrode active material does not have sufficient electron conductivity, and thus variously devising refinement of particles, and complexation with a conductive material, and the like is needed to perform charge and discharge of a large current, and much effort has been made.

However, in a case of performing the refinement of particles or the complexation by using a large amount of conductive material, a decrease in an electrode density is caused. Therefore, there is a problem in that a decrease in a density of a battery, that is, a decrease in a capacity per unit area is caused. Therefore, as a method of solving the problem, the following carbon coating method was found. In the carbon coating method, an organic material solution is used as a carbon precursor that is an electron conductive material, the organic material solution and electrode active material particles are mixed, and the resultant mixture is dried. A dried product that is obtained is subjected to a heat treatment under a non-oxidizing atmosphere to carbonize the organic material, whereby the surface of the electrode active material particles is coated with carbon.

The carbon coating method has the following excellent characteristics. That is, the surface of the electrode active material particles may be coated with a necessary minimum amount of carbon in a very efficient manner. In addition, an improvement in conductivity may be realized without largely decreasing the electrode density. Accordingly, various suggestions have been made.

As one of the suggestions, an electrode material in which the surface of particles formed from LiFePO₄ is coated with carbon generated by thermal decomposition of reducing sugar may be exemplified (Patent Document 1).

The electrode material may be easily composed by spraying a solution or suspension containing a lithium component, an Fe component, a P component, and reducing sugar, and by heating the sprayed solution or suspension.

In addition, as an inexpensive method of producing LiFePO₄-carbon composite material, the present inventors have already suggested a method in which an inexpensive trivalent iron raw material and an organic material are mixed, and the resultant mixture is subj ected to a heat treatment under an inert atmosphere (Patent Document 2).

### Citation List

### Patent Document

[Patent Document 1] Japanese Unexamined Patent Application Publication No. 2009-190957
[Patent Document 2] Japanese Patent No. 4522682
Summary of Invention

### Technical Problem

However, actually, among various types of electrode materials that may be obtained by the carbon coating method in the related art, only an electrode material in which a compound containing a small amount of heterogeneous element is added to a LiFePO₄ elementary substance or a LiFePO₄ elementary substance exhibits the effect. An electrode material other than LiFePO₄, for example, an electrode material of LiMnPO₄ has been expected from the viewpoints that resources are relatively abundant, operation at a relatively high voltage is possible, and a relatively high energy density may be obtained. However, practically, exhibition of satisfactory electrode performance by coating with a small amount of carbon which does not have an adverse effect on the electrode density has not been realized.

The reason for the above-described circumstance is considered as follows. Mn is known as a negative catalyst that suppresses a carbonization reaction, and this is the biggest factor leading to the following result. Even when the carbon coating method using an organic material, which is effectively used in LiFePO₄, is applied to LiMnPO₄, a sufficient effect may not be obtained.

An example in which the carbon coating is performed with an electrode active material obtained by solid-soluting LiFePO₄ in LiMnPO₄ has been reported. However, this example is not different from a result in which Fe that is a carbonization catalyst appears on a particle surface by constituting the electrode active material with the solid solution. Here, in order to obtain an amount of activity of Fe on the particle surface which exceeds the amount of activity of Mn as a negative catalyst, it is necessary to solid-solute Fe in a large amount to the extent in which at least a ratio of Fe/Mn exceeds 10/90. However, this leads to the following result. A region in which a relative electrochemical reaction potential is low exceeds 10% of the entire region. Therefore, the effect of high-energy LiMnPO₄ at high electric potential may not be sufficiently exhibited.

As an electrode active material to solve the above-described problems, the present inventors suggest an electrode active material in which only a surface of the electrode active material of LiMnPO₄ or LiCoPO₄ on which the carbon coating by carbonization of an organic material is difficult is coated with a coating layer containing the minimum amount of LiFePO₄ or LiNiPO₄, an electrode active material in which the surface of the coating layer is further coated with a coating layer containing carbonaceous electron conductive material, or an electrode active material in which the surface of particles of LiMnPO₄ or LiCoPO₄ is coated with a coating layer formed from a composite material of LiFePO₄ or LiNiPO₄, and a carbonaceous electron conductive material (Japanese Patent Application No. 2010-45235).

However, in these electrode active materials, high energy with high electrical potential may be reliably realized. However, new improvement in performance has been in demand. In addition, a method of forming the carbonaceous electron conductive coating layer excellent in a film quality on the surface of the electrode active material in an inexpensive manner has also not been sufficiently examined.

The invention has been made to solve the above-described problems, and an object thereof is to provide an electrode active material that is obtained by coating a surface of each particle of Li_{w}AₓDO₄ (provided that, A represents at least one selected from the group consisting of Mn and Co, D represents one or more selected from the group consisting of P, Si, and S, 0 < w ≤ 4, and 0 < x ≤ 1.5) with a coating layer containing Li_{y}E_{z}PO₄ (provided that, E represents at least one selected from the group consisting of Fe and Ni, 0 < y ≤ 2, and 0 < z ≤ 1.5) and a carbonaceous electron conductive material, and a method of producing an electrode active material which is capable of forming the electrode active material with a good film quality and in an inexpensive manner. Solution to Problem

The present inventors have extensively studied to solve the above-described problems, and as a result, they have found an electrode active material that is obtained by coating a surface of each particle of Li_{w}AₓDO₄ (provided that, A represents at least one selected from the group consisting of Mn and Co, D represents one or more selected from the group consisting of P, Si, and S, 0 < w ≤ 4, and 0 < x ≤ 1.5) with a coating layer containing Li_{y}E_{z}PO₄ (provided that, E represents at least one selected from the group consisting of Fe and Ni, 0 < y ≤ 2, and 0 < z ≤ 1.5) and a carbonaceous electron conductive material, and they have accomplished the invention.

That is, according to an aspect of the invention, there is provided an electrode active material that is obtained by coating a surface of each particle of Li_{w}AₓDO₄ (provided that, A represents at least one selected from the group consisting of Mn and Co, D represents one or more selected from the group consisting of P, Si, and S, 0 < w ≤ 4, and 0 < x ≤ 1.5) with a coating layer containing Li_{y}E_{z}PO₄ (provided that, E represents at least one selected from the group consisting of Fe and Ni, 0 < y ≤ 2, and 0 < z ≤ 1.5) and a carbonaceous electron conductive material.

It is preferable that an average particle size of primary particles of the electrode active material be 0.01 to 20 µm.

In addition, it is preferable that the electrode active material include secondary particles formed from the electrode active material in which an average particle size of primary particles of the electrode active material is 0.01 to 20 µm.

It is preferable that an average particle size of the secondary particles of the electrode active material be 1 to 200 µm.

It is preferable that the electrode active material have a spherical shape.

It is preferable that the E be produced using a trivalent iron raw material.

It is preferable that the E be produced using an Fe source containing at least one selected from the group consisting of iron (III) nitrate and iron (III) citrate.

In addition, the present inventors have extensively studied to solve the above-described problems. As a result, they have found that when a slurry obtained by suspending particles of Li_{w}AₓDO₄ (provided that, A represents at least one selected from the group consisting of Mn and Co, D represents one or more selected from the group consisting of P, Si, and S, 0 < w ≤ 4, and 0 < x ≤ 1.5) in an aqueous solution containing a Li source, an E source, a PO₄ source, and a carbon source is dried, and then is subjected to a heat treatment under a non-oxidizing atmosphere, a coating layer containing Li_{y}E_{z}PO₄ (provided that, E represents at least one selected from the group consisting of Fe and Ni, 0 < y ≤ 2, and 0 < z ≤ 1.5) and a carbonaceous electron conductive material may be formed on a surface of each particle of Li_{w}AₓDO₄ with a good film quality and in an inexpensive manner, and they have accomplished the invention.

That is, according to another aspect of the invention, there is provided a method of producing an electrode active material that is obtained by coating a surface of each particle of Li_{w}AₓDO₄ (provided that, A represents at least one selected from the group consisting of Mn and Co, D represents one or more selected from the group consisting of P, Si, and S, 0 < w ≤ 4, and 0 < x ≤ 1.5) with a coating layer containing Li_{y}E_{z}PO₄ (provided that, E represents at least one selected from the group consisting of Fe and Ni, 0 < y ≤ 2, and 0 < z ≤ 1.5) and a carbonaceous electron conductive material.

The method includes a step of drying slurry obtained by suspending particles of Li_{w}AₓDO₄ in an aqueous solution containing a Li source, an E source, a PO₄ source, and a carbon source, and a step of subjecting the resultant dried product to a heat treatment under a non-oxidizing atmosphere.

It is preferable that the method of producing an electrode active material further include a step of drying the slurry using a spray drying method.

It is preferable that the aqueous solution containing the Li source, the E source, the PO₄ source, and the carbon source have a uniform solution phase.

In addition, the present inventors have extensively studied to solve the above-described problems. As a result, they have found that when a slurry obtained by suspending particles of Li_{w}AₓDO₄ (provided that, A represents at least one selected from the group consisting of Mn and Co, D represents one or more selected from the group consisting of P, Si, and S, 0 < w ≤ 4, and 0 < x ≤ 1.5) in an aqueous solution that contains a Li source including at least one selected from the group consisting of lithium nitrate and lithium acetate, an Fe source including at least one selected from the group consisting of iron (III) nitrate and iron (III) citrate, a PO₄ source including H₃PO₄, and a carbon source including an aqueous organic material is dried, and then is subjected to a heat treatment under a non-oxidizing atmosphere, a coating layer containing Li_{y}E_{z}PO₄ (provided that, E represents at least one selected from the group consisting of Fe and Ni, 0 < y ≤ 2, and 0 < z ≤ 1.5) and a carbonaceous electron conductive material may be formed on the surface of particles of Li_{w}AₓDO₄ with a good film quality and in an inexpensive manner, and they have accomplished the invention.

That is, according to still another aspect of the invention, there is provided a method of producing an electrode active material that is obtained by coating a surface of each particle of Li_{w}AₓDO₄ (provided that, A represents at least one selected from the group consisting of Mn and Co, D represents one or more selected from the group consisting of P, Si, and S, 0 < w ≤ 4, and 0 < x ≤ 1.5) with a coating layer containing Li_{y}E_{z}PO₄ (provided that, E represents at least one selected from the group consisting of Fe and Ni, 0 < y ≤ 2, and 0 < z ≤ 1.5) and a carbonaceous electron conductive material.

The method preferably includes a step of drying slurry obtained by suspending particles of Li_{w}AₓDO₄ in an aqueous solution that contains a Li source including at least one selected from the group consisting of lithium nitrate and lithium acetate, an Fe source including at least one selected from the group consisting of iron (III) nitrate and iron (III) citrate, a PO₄ source including H₃PO₄, and a carbon source including an aqueous organic material, and a step of subjecting the resultant dried product to a heat treatment under a non-oxidizing atmosphere.

It is preferable that the aqueous solution containing the Li source, the Fe source, the PO₄ source, and the carbon source have a uniform solution phase.

### Advantageous Effects of Invention

According to the electrode active material of the invention, an electrode active material, which is obtained by coating a surface of each particle of Li_{w}AₓDO₄ (provided that, A represents at least one selected from the group consisting of Mn and Co, D represents one or more selected from the group consisting of P, Si, and S, 0 < w ≤ 4, and 0 < x ≤ 1.5) with a coating layer containing Li_{y}E_{z}PO₄ (provided that, E represents at least one selected from the group consisting of Fe and Ni, 0 < y ≤ 2, and 0 < z ≤ 1.5) and a carbonaceous electron conductive material, may be provided.

In addition, according to the method of producing the electrode active material of the invention, a coating layer containing Li_{y}E_{z}PO₄ (provided that, E represents at least one selected from the group consisting of Fe and Ni, 0 < y ≤ 2, and 0 < z ≤ 1.5) and a carbonaceous electron conductive material may be formed on a surface of each particle of Li_{w}AₓDO₄ (provided that, A represents at least one selected from the group consisting of Mn and Co, D represents one or more selected from the group consisting of P, Si, and S, 0 < w ≤ 4, and 0 < x ≤ 1.5) with a good film quality and in an inexpensive manner.

In addition, in the electrode active material of the invention, and the method of producing the same, since an inexpensive trivalent iron raw material such as iron (III) nitrate and iron (III) citrate is used as an iron raw material that is a carbonization catalyst, a coating layer containing Li_{y}E_{z}PO₄ (provided that, E represents at least one selected from the group consisting of Fe and Ni, 0 < y ≤ 2, and 0 < z ≤ 1.5) and a carbonaceous electron conductive material may be formed on a surface of each particle of Li_{w}AₓDO₄ (provided that, A represents at least one selected from the group consisting of Mn and Co, D represents one or more selected from the group consisting of P, Si, and S, 0 < w ≤ 4, and 0 < x ≤ 1.5) with a good film quality and in an inexpensive manner.

The carbonization catalyst itself such as iron (III) nitrate and iron (III) citrate becomes a satisfactory electrode active material after forming the coating layer. Accordingly, an electrode active material, which does not hinder intercalation and deintercalation of Li with respect to the particles of Li_{w}AₓDO₄ and which has very satisfactory characteristics, may be obtained.

When an electrode material including Li_{w}AₓDO₄ having an olivine structure (provided that, A represents at least one selected from the group consisting of Mn and Co, D represents one or more selected from the group consisting of P, Si, and S, 0 < w ≤ 4, and 0 < x ≤ 1.5) is used, and a coating layer containing Li_{y}E_{z}PO₄ (provided that, E represents at least one selected from the group consisting of Fe and Ni, 0 < y ≤ 2, and 0 < z ≤ 1.5) and a carbonaceous electron conductive material in a necessary minimum amount is effectively formed, an electrode material for lithium ion batteries, an electrode plate, and a lithium ion battery for which long-term cycle stability or safety at relatively high voltage, high energy density, and high load characteristics may be expected may be prepared.

Furthermore, since the Li source, the E source, the PO₄ source, and the carbon source are made to have a uniform solution phase, the film quality of the coating layer which is formed on the surface of each particle of Li_{w}AₓDO₄ and contains the Li_{y}E_{z}PO₄ and the carbonaceous electron conductive material becomes uniform, and the film thickness thereof also becomes small. Accordingly, the coating layer which has a uniform film quality and a small film thickness, and which contains the Li_{y}E_{z}PO₄ and the carbonaceous electron conductive material may be effectively and easily formed on the surface of particles of Li_{w}AₓDO₄.

### Brief Description of Drawings

FIG. 1 is a scanning electron microscope (SEM) image illustrating an electrode active material of Example 3 of the invention.
FIG. 2 is a scanning electron microscope (SEM) image illustrating an electrode active material of a comparative example.
FIG. 3 is a diagram illustrating charge and discharge characteristics of Example 1 of the invention and the comparative example, respectively.

### Description of Embodiments

First, an embodiment to carry out a method of producing an electrode active material of the invention will be described.

In addition, this embodiment is described in detail for easy comprehension of the gist of the invention, but the embodiment is not intended to limit the invention unless otherwise stated.

The method of producing the electrode active material of the embodiment is a method of producing an electrode active material obtained by coating a surface of each particle of Li_{w}AₓDO₄ (provided that, A represents at least one selected from the group consisting of Mn and Co, D represents one or more selected from the group consisting of P, Si, and S, 0 < w ≤ 4, and 0 < x ≤ 1.5) with a coating layer containing Li_{y}E_{z}PO₄ (provided that, E represents at least one selected from the group consisting of Fe and Ni, 0 < y ≤ 2, and 0 < z ≤ 1.5) and a carbonaceous electron conductive material. The method includes a step of drying a slurry obtained by suspending particles of Li_{w}AₓDO₄ in an aqueous solution containing a Li source, an E source, a PO₄ source, and a carbon source, and a step of subjecting the resultant dried product to a heat treatment under a non-oxidizing atmosphere.

More preferably, the method of producing the electrode active material of the embodiment includes a step of drying a slurry obtained by suspending particles of Li_{w}AₓDO₄ in an aqueous solution that contains a Li source including at least one selected from the group consisting of lithium nitrate and lithium acetate, an Fe source including at least one selected from the group consisting of iron (III) nitrate and iron (III) citrate, a PO₄ source including H₃PO₄, and a carbon source including an aqueous organic material, and a step of subjecting the resultant dried product to a heat treatment under a non-oxidizing atmosphere.

The particles expressed by Li_{w}AₓDO₄ may be obtained as follows. A Li source, an A source, and a D source are put into a solvent containing water as a main component in such a manner that a molar ratio (Li source : A source : D source) thereof becomes w : x : 1, and the resultant mixture is stirred to obtain a precursor solution of Li_{w}AₓDO₄, the precursor solution is put into a pressure resistant vessel, and a hydrothermal treatment is performed in the pressure resistant container under a high temperature and a high pressure, for example, at 120 to 250°C, at 0.2 MPa or more, and for one hour to 24 hours to obtain the particles.

For example, a Li compound such as lithium hydroxide (LiOH) and lithium carbonate (Li₂CO₃) is used as the Li source, one or two of compound selected from the group consisting of those of Mn and Co are used as the A source, and one or more of compound selected from the group consisting of P, Si, and S are used as the D source.

In this case, a particle size of Li_{w}AₓDO₄ particles may be controlled to have a desired size by adjusting the temperature, the pressure, and the time during the hydrothermal treatment.

The Li_{w}AₓDO₄ particles that are obtained in this manner are put into a solution that contains the Li source, the E source, and the PO₄ source in a ratio of y : z : 1 in terms of a molar ratio (Li source : E source : PO₄ source) , and an organic material as a carbon source. The resultant mixture is stirred to obtain a slurry.

More preferably, the Li_{w}AₓDO₄ particles that are obtained in this manner are put into an aqueous solution that contains a Li source including at least one selected from the group consisting of lithium nitrate and lithium acetate, an Fe source including at least one selected from the group consisting of iron (III) nitrate and iron (III) citrate as the E source, a PO₄ source including H₃PO₄, and a carbon source including an aqueous organic material, and the resultant mixture is stirred to be suspended, whereby a slurry is obtained.

As the Li source, for example, one or more, which are selected from the group consisting of lithium salts of inorganic acids such as lithium nitrate, lithium acetate, lithium hydroxide (LiOH), lithium carbonate (Li₂CO₃), lithium chloride (LiCl), and lithium phosphate (Li₃PO₄), lithium salts of organic acids such as lithium acetate (LiCH₃COO) and lithium oxalate ((COOLi)₂), and hydrates thereof, are suitably used. Among these, at least one or more selected from the group consisting of lithium nitrate and lithium acetate are preferably used.

As the E source, a compound including one or two selected from the group consisting of Fe and Ni, for example, one or more selected from the group consisting of iron (III) nitrate, iron (III) citrate, iron (II) chloride (FeCl₂), iron (II) sulfate (FeSO₄), iron (II) acetate (Fe(CH₃COO)₂), nickel (II) chloride (NiCl₂), nickel (II) sulfate (NiSO₄), nickel (II) acetate (Ni(CH₃COO)₂), and hydrates thereof are suitably used. Among these, one or more selected from the group consisting of iron (III) nitrate, and iron (III) citrate are preferably used.

As the PO₄ source, one or more selected from a phosphoric acid source group consisting of phosphoric acids such as orthophosphoric acid (H₃PO₄) and metaphosphoric acid (HPO₃), ammonium dihydrogen phosphate (NH₄H₂PO₄), diammonium hydrogen phosphate ((NH₄)₂HPO₄), ammonium phosphate ((NH₄)₃PO₄), and hydrates thereof are suitably used. Among these, H₃PO₄ is more preferably used.

It is preferable that the aqueous solution containing the Li source, the E source, the PO₄ source, and the carbon source have a uniform solution phase.

When the aqueous solution is made to have a uniform solution phase, a film quality of a coating layer which is formed on a surface of each Li_{w}AₓDO₄ particle and which contains Li_{y}E_{z}PO₄ and a carbonaceous electron conductive material becomes uniform, and thus a film thickness becomes small.

Here, the aqueous organic material is not particularly limited as long as the aqueous organic material is an organic material which is soluble in water and which generates carbon when being subjected to a heat treatment under a non-oxidizing atmosphere. Examples of the aqueous organic material include higher monohydroxy alcohols such as hexanol and octanol, unsaturated monohydroxy alcohols such as allyl alcohol, propynol (propargyl alcohol), and terpineol, polyvinyl alcohol (PVA), and the like.

Although not particularly limited, it is preferable that a concentration of the aqueous organic material in the slurry be 1 to 25% by mass to uniformly form a coating layer containing Li_{y}E_{z}PO₄ and a carbonaceous electron conductive material on the surface of Li_{w}AₓDO₄ particles.

The solvent that dissolves the aqueous organic material is not particularly limited as long as the aqueous organic material is dissolved in the solvent. However, examples of the aqueous solvent include water, alcohols such as methanol, ethanol, 1-propanol, 2-propanol (isopropyl alcohol: IPA), butanol, pentanol, hexanol, octanol, diacetone alcohol, esters such as ethyl acetate, butyl acetate, ethyl lactate, propylene glycol monomethyl ether acetate, propylene glycol monoethyl ether acetate, γ-butyrolactone, ethers such as diethyl ether, ethylene glycol monomethyl ether (methyl cellosolve), ethylene glycol monoethyl ether (ethyl cellosolve), ethylene glycol monobutyl ether (butyl cellosolve), diethylene glycol monomethyl ether, and diethylene glycol monoethyl ether, ketones such as acetone, methyl ethyl ketone (MEK), methyl isobutyl ketone (MIBK), acetylacetone, and cyclohexanone, amides such as dimethylformamide, N,N-dimethylacetoacetamide, and N-methylpyrrolidone, glycols such as ethylene glycol, diethylene glycol, and propylene glycol, and the like. These may be used alone or two or more thereof may be mixed and used.

Next, the slurry is dried to obtain a dried product, and this dried product is subjected to a heat treatment under a non-oxidizing atmosphere at a temperature within a range of 500 to 1,000°C, and preferably 600 to 900°C for one hour to 24 hours.

A method of drying the slurry is not particularly limited, but from the viewpoint of obtaining a spherical powder having a narrow particle size distribution, a spray drying method in which spray drying is performed at a predetermined temperature using a spray dryer is appropriate. A temperature of the spray dryer is preferably set to 80 to 300°C, and more preferably 100 to 250°C. In addition, a heat treatment by spraying under a high-temperature atmosphere, for example, under nitrogen maintained at 600°C may be used in combination with the drying using the spray dryer. In this case, the heat treatment may be performed after performing the spray drying treatment using the spray dryer.

In addition, in this specification, particles, which are obtained by subjecting the slurry to the drying and heat treatment as described, are referred to as primary particles. In addition, particles, which are obtained by agglomeration of a plurality of the primary particles after being subjected to the spray drying by the spray dryer, are referred to as secondary particles.

As the non-oxidizing atmosphere, an inert atmosphere such as nitrogen (N₂) and argon (Ar) is preferable, and in a case of further suppressing oxidation, a reducing atmosphere including a reducing gas such as hydrogen (H₂) is preferable. In addition, a burnable and flammable gas such as oxygen (O₂) may be introduced into the inert atmosphere for the purpose of removing an organic component that evaporates into the non-oxidizing atmosphere during the heat treatment.

In addition, the reason why the heat treatment is set to 500 to 1,000°C is as follows. When the heat treatment temperature is lower than 500°C, a decomposition reaction of an aqueous organic material contained in the dried product does not progress sufficiently, and thus carbonization of the aqueous organic material becomes insufficient. As a result, a high-resistance organic decomposed material is generated in the electrode active material that is obtained. On the other hand, when the heat treatment temperature is higher than 1,000°C, Li in the electrode active material evaporates, and thus a compositional deviation may occur in the electrode active material, and grain growth of the electrode active material is promoted. As a result, a discharge capacity at a high-speed charge and discharge rate decreases, and thus it is difficult to realize sufficient charge and discharge rate performance.

Here, a particle size distribution of the electrode active material that is obtained may be controlled by appropriately adjusting conditions during the heat treatment of the dried product, for example, a temperature rising rate, the highest retention temperature, a retention time, and the like.

As described above, the electrode active material, which is obtained by coating the surface of the Li_{w}AₓDO₄ particles with the coating layer containing the Li_{y}E_{z}PO₄ and the carbonaceous electron conductive material, may be easily produced.

The electrode active material of the invention is an electrode active material that is obtained by coating a surface of each particle of Li_{w}AₓDO₄ (provided that, A represents at least one selected from the group consisting of Mn and Co, D represents one or more selected from the group consisting of P, Si, and S, 0 < w ≤ 4, and 0 < x ≤ 1.5) with a coating layer containing Li_{y}E_{z}PO₄ (provided that, E represents at least one selected from the group consisting of Fe and Ni, 0 < y ≤ 2, and 0 < z ≤ 1.5) and a carbonaceous electron conductive material.

The size of the electrode active material is not particularly limited. However, it is preferable that an average particle size of primary particles be 0.01 to 20 µm, more preferably 0.02 to 5 µm, and still more preferably 0.02 to 0.55 µm.

Here, the reason why the average particle size of the primary particles of the electrode active material is limited within the above-described range is as follows. When the average particle size of the primary particles is less than 0.01 µm, it is difficult to sufficiently coat the surface of the primary particles with a thin film-shaped coating layer containing the Li_{y}E_{z}PO₄ and the carbonaceous electron conductive material. Therefore, a discharge capacity at a high-speed charge and discharge rate becomes low, and it is difficult to realize sufficient charge and discharge rate performance. Therefore, the above-described range is not preferable. On the other hand, when the average particle size of the primary particles exceeds 20 µm, an internal resistance of the primary particles increases, and thus a discharge capacity at a high-speed charge and discharge rate becomes insufficient. Therefore, the above-described range is not preferable. Accordingly, when the average particle size of the primary particles of the electrode active material is set within the above-described limited range, coating characteristics of the surface of the primary particles may be improved while sufficiently securing the discharge capacity and the charge and discharge rate performance of the electrode.

Although not particularly limited, the average particle size of secondary particles of the electrode active material is preferably 1 to 200 µm, more preferably 1 to 100 µm, and still more preferably 3 to 50 µm.

Here, the reason why the above-described range is preferable as the average particle size of the secondary particles of the electrode active material is as follows. When the average particle size of the secondary particles is less than 1 µm, an amount of a binding agent necessary during coating increases, and thus securement of sufficient bonding strength may become a factor of causing a decrease in an electrical capacity of an electrode. On the other hand, when the average particle size of the secondary particles exceeds 200 µm, it is difficult to smoothly coat an electrode plate. Accordingly, when the average particle size of the secondary particles of the electrode active material is set to the above-described preferable range, coating workability of the electrode active material may be improved while sufficiently securing the electrical capacity and bonding strength of the electrode.

The shape of the electrode active material is not particularly limited. However, from the viewpoint that the electrode material including secondary particles having a spherical shape, particularly, a perfectly spherical shape have a tendency to be generated, it is appropriate that the electrode active material also has a spherical shape, particularly, a perfectly spherical shape.

Here, the reason why the spherical shape is preferable as the shape of the electrode active material is as follows. When preparing paste for a positive electrode by mixing the electrode active material, the binder resin (binding agent), and a solvent, an amount of a solvent may be reduced, and it is easy to coat a current collector with the paste for the positive electrode.

In addition, when the electrode active material has the spherical shape, a surface area of the electrode active material becomes the minimum, and thus a mixing amount of the binder resin (binding agent) that is added to an electrode material mixture may be reduced to the minimum. Accordingly, the internal resistance of a positive electrode that is obtained may be made small, and thus the spherical shape is preferable.

Furthermore, since the electrode active material has a tendency to be closely packed, a charged amount of a positive electrode material per unit volume increases, and thus an electrode density may increase. As a result, high-capacity of the lithium ion battery may be realized, and thus the spherical shape is preferable.

As described above, according to the electrode active material of the embodiment, an electrode active material, which is obtained by coating a surface of each particle of Li_{w}AₓDO₄ (provided that, A represents at least one selected from the group consisting of Mn and Co, D represents one or more selected from the group consisting of P, Si, and S, 0 < w ≤ 4, and 0 < x ≤ 1.5) with a coating layer containing Li_{y}E_{z}PO₄ (provided that, E represents at least one selected from the group consisting of Fe and Ni, 0 < y ≤ 2, and 0 < z ≤ 1.5) and a carbonaceous electron conductive material, may be provided.

In addition, according to the method of producing the electrode active material of the embodiment, a coating layer containing Li_{y}E_{z}PO₄ (provided that, E represents at least one selected from the group consisting of Fe and Ni, 0 < y ≤ 2, and 0 < z ≤ 1.5) and a carbonaceous electron conductive material may be formed on a surface of each particle of Li_{w}AₓDO₄ (provided that, A represents at least one selected from the group consisting of Mn and Co, D represents one or more selected from the group consisting of P, Si, and S, 0 < w ≤ 4, and 0 < x ≤ 1.5) with a good film quality and in an inexpensive manner.

In addition, according to the method of producing the electrode active material of the embodiment, when slurry obtained by suspending particles of Li_{w}AₓDO₄ in an aqueous solution that contains a Li source including at least one selected from the group consisting of lithium nitrate and lithium acetate, an Fe source including at least one selected from the group consisting of iron (III) nitrate and iron (III) citrate, a PO₄ source including H₃PO₄, and a carbon source including an aqueous organic material is dried, and then is subjected to a heat treatment under a non-oxidizing atmosphere, a coating layer containing Li_{y}E_{z}PO₄ and a carbonaceous electron conductive material may be formed on the surface of particles of Li_{w}AₓDO₄ with a good film quality and in an inexpensive manner.

The carbonization catalyst itself such as iron (III) nitrate and iron (III) citrate becomes a satisfactory electrode active material after forming the coating layer. Accordingly, an electrode active material, which does not hinder intercalation and deintercalation of Li with respect to the particles of Li_{w}AₓDO₄ and which has very satisfactory characteristics, may be obtained.

When Li_{w}AₓDO₄ having an olivine structure is used, and a coating layer containing Li_{y}E_{z}PO₄ and a carbonaceous electron conductive material in a necessary minimum amount is effectively formed, an electrode material for lithium ion batteries, an electrode plate, and a lithium ion battery for which long-term cycle stability or safety at relatively high voltage, high energy density, and high load characteristics may be expected may be prepared.

Furthermore, since the aqueous solution containing the Li source, the E source, the PO₄ source, and the carbon source are made to have a uniform solution phase, the film quality of the coating layer which is formed on the surface of each particle of Li_{w}AₓDO₄ and contains the Li_{y}E_{z}PO₄ and the carbonaceous electron conductive material may become uniform, and the film thickness thereof also may become small. Accordingly, the coating layer which has a uniform film quality and a small film thickness, and which contains the Li_{y}E_{z}PO₄ and the carbonaceous electron conductive material may be effectively and easily formed on the surface of particles of Li_{w}AₓDO₄.

### Examples

Hereinafter, the invention will be described in detail with reference to examples and a comparative example, but the invention is not limited to these examples.

### Synthesis of "LiMnPO₄"

LiMnPO₄ commonly used in the examples and comparative example was prepared by hydrothermal synthesis.

Specifically, Li₃PO₄ was used as a Li source and a P source, MnSO₄·5H₂O was used as a Mn source, and these were dissolved in pure water in a molar ratio of Li : Mn : P = 3 : 1 : 1 to prepare 200 mL of a precursor solution.

Next, the precursor solution was put into a pressure resistant vessel, and hydrothermal synthesis was performed at 170°C for 24 hours. After the reaction, cooling was performed to room temperature, whereby a cake-shaped reaction product that precipitated was obtained.

Next, the precipitate was washed with distilled water five times to wash out impurities, and a moisture content of 30% was maintained so as not to be dried, whereby cake-shaped LiMnPO₄ was obtained.

A powder, which was obtained by collecting a small amount of sample from the cake-shaped LiMnPO₄, and vacuum-drying the sample at 70°C for two hours, was identified by an X-ray diffraction method, and it was confirmed that single-phase LiMnPO₄ was generated.

### "Preparation of Electrode Active Material"

### (Example 1)

A solution obtained by dissolving lithium acetate, iron (III) citrate, and phosphoric acid in water in a mass ratio of 1 : 1 : 1, and an aqueous polyvinyl alcohol solution were mixed to obtain a uniform solution.

A concentration of the solution was set to 5% by mass in terms of LiFePO₄,and 8% by mass in terms of polyvinyl alcohol.

Then, 100 g of the LiMnPO₄ was added to 100 g of the solution, and then a dispersion treatment was performed using a ball mill, whereby LiMnPO₄-containing a slurry was obtained.

The LiMnPO₄-containing slurry was dried in a heating dryer, and then was subjected to a heat treatment under a nitrogen atmosphere at 600°C for one hour, whereby an electrode active material A1 of Example 1 was obtained.

### (Example 2)

An electrode active material A2 of Example 2 was obtained in the same manner as Example 1 except that lithium acetate was substituted with lithium nitrate, iron (III) citrate was substituted with iron (III) nitrate, and polyvinyl alcohol was substituted with glucose.

### (Example 3)

LiMnPO₄-containing slurry was obtained in the same manner as Example 1.

Then, the LiMnPO₄-containing slurry was sprayed and dried in an atmosphere of 150°C using a spray dryer.

Then, the dried product was subjected to a heat treatment under a nitrogen atmosphere at 600°C for one hour, whereby an electrode active material A3 of Example 3 was obtained.

A particle shape of the electrode active material A3 was observed by a scanning electron microscope (SEM), and it could be seen that the electrode active material A3 was spherical secondary particles having an average particle size of 10 µm.

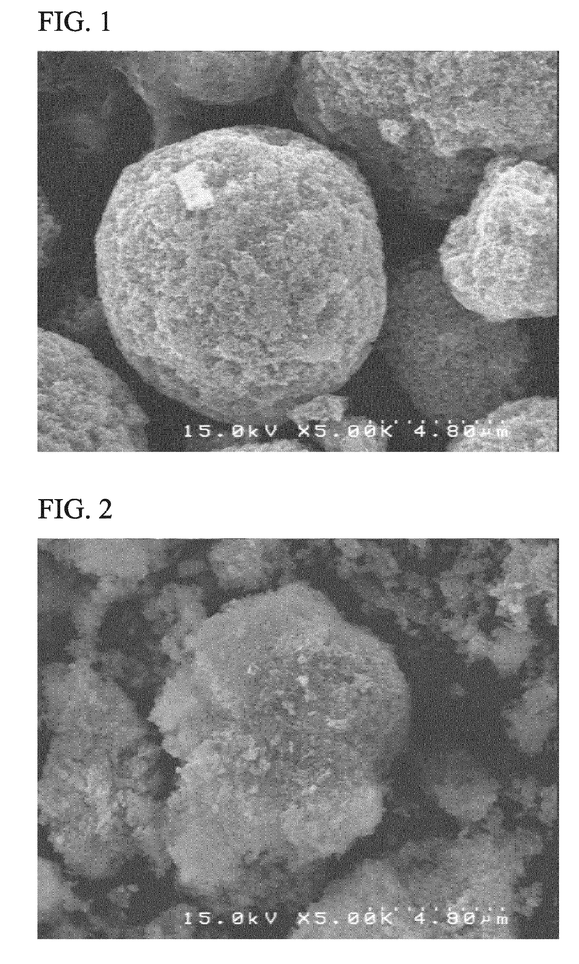

FIG. 1 shows a scanning electron microscope (SEM) image of the electrode active material A3 of Example 3.

### (Comparative Example)

Lithium hydroxide, iron (II) acetate, and ammonium dihydrogen phosphate were put into water in a mass ratio of 1 : 1 : 1, and were mixed with each other to obtain a solution. A precipitate occurred in the solution.

The solution and aqueous polyvinyl alcohol solution were mixed with each other to obtain a mixed solution.

A concentration of the mixed solution was 5% by mass in terms of LiFePO₄,and 8% by mass in terms of polyvinyl alcohol.

Then, an electrode active material B of the Comparative Example was obtained in the same manner as Example 1 after the process of adding the LiMnPO₄ to the mixed solution.

A particle shape of the electrode active material B was observed by a scanning electron microscope (SEM), it could be seen that the sizes or shapes were various, and there were fewer spherical shapes.

FIG. 2 shows a scanning electron microscope (SEM) image of the electrode active material B of the Comparative Example.

### "Preparation of Lithium Ion Battery"

Positive electrodes of Examples 1 to 3, and the Comparative Example were prepared, respectively.

Here, the electrode active materials A1 to A3, and B that were obtained in Examples 1 to 3 and the Comparative Example, acetylene black (AB) as a conductive auxiliary agent, polyvinylidene fluoride (PVdF) as a binder, and N-methyl-2-pyrrolidinone (NMP) as a solvent were used, and these were mixed to prepare positive electrode material paste of each of Examples 1 to 3 and the Comparative Example.

Then, the positive electrode material paste was applied onto aluminum (Al) foil having a thickness of 30 µm, and was dried. Then, the resultant aluminum foil including the dried electrode material was compressed to have a predetermined density, and was set as an electrode plate.

Then, the electrode plate was punched in a disk shape having a diameter of 16 mm using a shaping machine to prepare a positive electrode for test.

On the other hand, a commercially available natural graphite negative electrode plate was used as a negative electrode, a porous polypropylene film was used as a separator, and a LiPF₆ solution of 1 mol/L was used as a non-aqueous electrolyte solution as a non-aqueous electrolyte. As a solvent of the LiPF₆ solution, a solvent in which a ratio between ethylene carbonate and diethyl carbonate was 1:1 was used.

In addition, lithium ion batteries of Examples 1 to 3 and the Comparative Example were prepared using the positive electrode for test, the negative electrode, and the LiPF₆ solution which were prepared as described above, and a 2016-type coil cell.

### "Weighing of Amount of Carbon of Electrode Active Material"

Weighing of an amount of carbon of each of the electrode active materials A1 to A3, and B which were obtained in Examples 1 to 3, and the Comparative Example was performed using a carbon analyzer (manufactured by HORIBA, Ltd.). Measurement results are shown in Table 1.

According to the measurement results, a carbonaceous conductive coating was formed due to an effect of a carbonization catalyst in all of the electrode active materials of Examples 1 to 3 and the Comparative Example. However, particularly, in the electrode active materials of Examples 1 to 3, since LiMnPO₄ was added to the aqueous solution which contained the Li source, the Fe source, the PO₄ source, and the carbon source, and had a uniform solution phase to obtain the LiMnPO₄-containing slurry, more effective usage of the catalyst was possible. Accordingly, even when the amount of the organic material was the same in each case, it could be seen that in the electrode active material of Examples 1 to 3, an amount of a carbonaceous coating was more than that of the electrode active material in the Comparative Example.

### "Battery Characteristics Test"

A battery characteristics test of the lithium ion batteries of Examples 1 to 3 and the comparative example was performed as follows. Charging was performed at an environmental temperature of 60°C and with a charge current of 0.1 CA until an electrical potential of a test electrode became 4.5V with respect to an equilibrium potential of Li. Then, after a pause for one minute, discharging was performed with a discharge current of 0.1 CA until it reached 2.0 V.

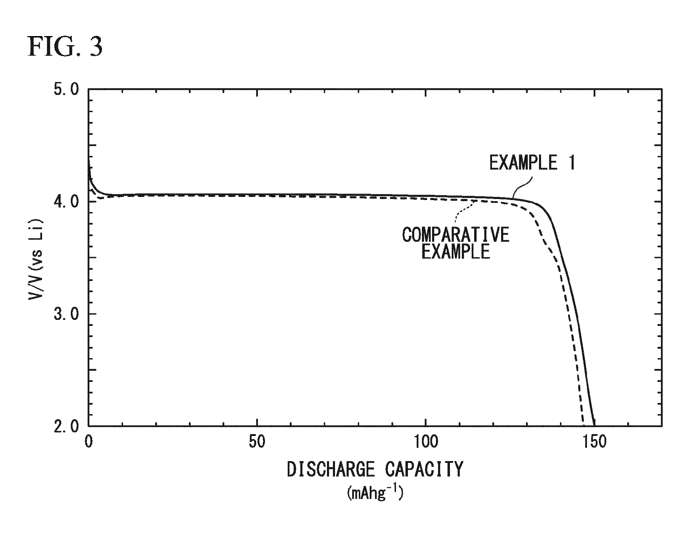

Discharge capacities (mAh/g) of Examples 1 to 3 and the Comparative Example are shown in Table 1. In addition, charge and discharge curves with 0.1 CA of Example 1 and the Comparative Example are shown in FIG. 3, respectively.

**[Table 1]**

| | Electrode active material | Amount of carbon (% by mass) | Discharge capacity (mAh/g) |
|---|---|---|---|
| Example 1 | A1 | 2.20 | 150 |
| Example 2 | A2 | 2.30 | 150 |
| Example 3 | A3 | 2.21 | 152 |
| Comparative Example | B | 1.87 | 146 |

From the above-described results, it could be seen that in the electrode active materials of Examples 1 to 3, an amount of carbon was larger and the thickness of the coating layer containing the carbonaceous electron conductive material was more uniform compared to the electrode active material of the Comparative Example.

In addition, it could be seen that in the electrode active materials of Examples 1 to 3, a discharge capacity was larger and discharge characteristics were more excellent compared to the electrode active material of the Comparative Example.

In addition, since the electrode active material of Example 3 was obtained using the spray drying method in the step of drying the slurry, spherical secondary particles may be obtained, and thus filling properties in an electrode are improved, and high-density of the positive electrode may be easily realized. The spray drying method is also excellent in mass productivity, and thus the obtained electrode active material has high performance and is inexpensive.

Furthermore, in Examples 1 to 3, even in cases where LiCoPO₄ was used in place of LiMnPO₄, part of Mn was doped, and Si was used in place of P, the same result was obtained.

In addition, even in a case where LiNiPO₄ was used in place of LiFePO₄,the same result was obtained.

In addition, in the examples, the acetylene black was used as the conductive auxiliary agent. However, a carbon material such as carbon black, graphite, ketjen black, and natural graphite, artificial graphite may be used. In addition, the evaluation was performed using a battery in which a commercially available natural graphite negative electrode plate was used as the negative electrode. However, negative electrode materials including a carbon material such as natural graphite, artificial graphite, and cokes, Li₄Ti₅O₁₂, a Li alloy, and the like may be also used. In addition, a solution obtained by mixing ethylene carbonate containing LiPF₆ of 1 mol/L and diethyl carbonate in a ratio of 1 : 1 (volume ratio) is used as the non-aqueous electrolytic solution that is a non-aqueous electrolytic solution. However, LiBF₄ or LiClO₄ may be used in place of LiPF₆, and propylene carbonate or diethyl carbonate may be used in place of ethylene carbonate. In addition, a solid electrolyte may be used in place of the electrolytic solution and the separator.

### Industrial Applicability

According to the electrode active material of the invention, an electrode active material, which is obtained by coating a surface of each particle of Li_{w}AₓDO₄ (provided that, A represents at least one selected from the group consisting of Mn and Co, D represents one or more selected from the group consisting of P, Si, and S, 0 < w ≤ 4, and 0 < x ≤ 1.5) with a coating layer containing Li_{y}E_{z}PO₄ (provided that, E represents at least one selected from the group consisting of Fe and Ni, 0 < y ≤ 2, and 0 < z ≤ 1.5) and a carbonaceous electron conductive material, may be provided.

In addition, according to the method of producing the electrode active material of the invention, a coating layer containing Li_{y}E_{z}PO₄ (provided that, E represents at least one selected from the group consisting of Fe and Ni, 0 < y ≤ 2, and 0 < z ≤ 1.5) and a carbonaceous electron conductive material may be formed on a surface of each particle of Li_{w}AₓDO₄ (provided that, A represents at least one selected from the group consisting of Mn and Co, D represents one or more selected from the group consisting of P, Si, and S, 0 < w ≤ 4, and 0 < x ≤ 1.5) with a good film quality and in an inexpensive manner.

Furthermore, according to the method of producing the electrode active material of the invention, when slurry obtained by suspending particles of Li_{w}AₓDO₄ in an aqueous solution that contains a Li source including at least one selected from the group consisting of lithium nitrate and lithium acetate, an Fe source including at least one selected from the group consisting of iron (III) nitrate and iron (III) citrate, a PO₄ source including H₃PO₄, and a carbon source including an aqueous organic material is dried, and then is subjected to a heat treatment under a non-oxidizing atmosphere, a coating layer containing Li_{y}E_{z}PO₄ and a carbonaceous electron conductive material may be formed on the surface of particles of Li_{w}AₓDO₄ with a good film quality and in an inexpensive manner.

Accordingly, the electrode active material and the method of producing the same are applicable to next-generation secondary batteries in which new improvement in discharge characteristics of lithium ion batteries is realized and which meet expectations for further miniaturization, lightness, and high capacity. In the case of the next-generation secondary batteries, the effect becomes very significant.

## Claims

1. An electrode active material that is obtained by coating a surface of each particle of Li_{w}AₓDO₄ (provided that, A represents at least one selected from the group consisting of Mn and Co, D represents one or more selected from the group consisting of P, Si, and S, 0 < w ≤ 4, and 0 < x ≤ 1.5) with a coating layer containing Li_{y}E_{z}PO₄ (provided that, E represents at least one selected from the group consisting of Fe and Ni, 0 < y ≤ 2, and 0 < z ≤ 1.5) and a carbonaceous electron conductive material.

2. The electrode active material according to claim 1,
wherein an average particle size of primary particles of the electrode active material is 0.01 to 20 µm.

3. An electrode active material that includes secondary particles formed from the electrode active material according to claim 2.

4. The electrode active material according to any one of claims 1 to 3,
wherein an average particle size of the secondary particles of the electrode active material is 1 to 200 µm.

5. The electrode active material according to any one of claims 1 to 3,
wherein the electrode active material has a spherical shape.

6. The electrode active material according to any one of claims 1 to 3,
wherein the E is produced using a trivalent iron raw material.

7. The electrode active material according to any one of claims 1 to 3,
wherein the E is produced using an Fe source containing at least one selected from the group consisting of iron (III) nitrate and iron (III) citrate.

8. A method of producing an electrode active material that is obtained by coating a surface of each particle of Li_{w}AₓDO₄ (provided that, A represents at least one selected from the group consisting of Mn and Co, D represents one or more selected from the group consisting of P, Si, and S, 0 < w ≤ 4, and 0 < x ≤ 1.5) with a coating layer containing Li_{y}E_{z}PO₄ (provided that, E represents at least one selected from the group consisting of Fe and Ni, 0 < y ≤ 2, and 0 < z ≤ 1.5) and a carbonaceous electron conductive material, the method comprising:
a step of drying slurry obtained by suspending particles of Li_{w}AₓDO₄ in an aqueous solution containing a Li source, an E source, a PO₄ source, and a carbon source; and
a step of subjecting the resultant dried product to a heat treatment under a non-oxidizing atmosphere.

9. The method of producing an electrode active material according to claim 8, further comprising:
a step of drying the slurry using a spray drying method.

10. The method of producing an electrode active material according to claim 8 or 9,
wherein the aqueous solution containing the Li source, the E source, the PO₄ source, and the carbon source has a uniform solution phase.

11. A method of producing an electrode active material that is obtained by coating a surface of each particle of Li_{w}AₓDO₄ (provided that, A represents at least one selected from the group consisting of Mn and Co, D represents one or more selected from the group consisting of P, Si, and S, 0 < w ≤ 4, and 0 < x ≤ 1.5) with a coating layer containing Li_{y}E_{z}PO₄ (provided that, E represents at least one selected from the group consisting of Fe and Ni, 0 < y ≤ 2, and 0 < z ≤ 1.5) and a carbonaceous electron conductive material, the method comprising:
a step of drying slurry obtained by suspending particles of Li_{w}AₓDO₄ in an aqueous solution that contains a Li source including at least one selected from the group consisting of lithium nitrate and lithium acetate, an Fe source including at least one selected from the group consisting of iron (III) nitrate and iron (III) citrate, a PO₄ source including H₃PO₄, and a carbon source including an aqueous organic material; and
a step of subjecting the resultant dried product to a heat treatment under a non-oxidizing atmosphere.
